(19) Europäisches Patentamt
European Patent Office
Office européen des brevets

(11) **EP 2 996 235 B1**

(12) **EUROPÄISCHE PATENTSCHRIFT**

(45) Veröffentlichungstag und Bekanntmachung des Hinweises auf die Patenterteilung:
**02.09.2020 Patentblatt 2020/36**

(51) Int Cl.:
*H02M 3/158* *(2006.01)*　　*H02M 1/00* *(2006.01)*

(21) Anmeldenummer: **15184084.0**

(22) Anmeldetag: **07.09.2015**

(54) **DC/DC-WANDLER**

DC/DC-CONVERTER

CONVERTISSEUR CC/CC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2014　AT 506272014**

(43) Veröffentlichungstag der Anmeldung:
**16.03.2016 Patentblatt 2016/11**

(73) Patentinhaber: **Fronius International GmbH 4643 Pettenbach (AT)**

(72) Erfinder:
• **Schmalnauer, Andreas**
**4060 Leonding (AT)**
• **Krößwang-Ridler, Thomas**
**4600 Wels (AT)**

(74) Vertreter: **Patentanwälte Pinter & Weiss OG Prinz-Eugen-Straße 70 1040 Wien (AT)**

(56) Entgegenhaltungen:
**EP-A1- 3 163 734**　　**WO-A1-2011/089483**

• **RYSZARD STRZELECKI ET AL: "Four Level Diode-Clamped Back-To-Back Converter with active DC link voltage control", 2013 INTERNATIONAL CONFERENCE-WORKSHOP COMPATIBILITY AND POWER ELECTRONICS, IEEE, 5. Juni 2013 (2013-06-05), Seiten 182-187, XP032483719, ISSN: 2166-9538, DOI: 10.1109/CPE.2013.6601151 [gefunden am 2013-09-16]**
• **QIAO C ET AL: "Control of Boost type Converter at Discontinuous Conduction Mode by Controlling the Product of Inductor Voltage-Second", POWER ELECTRONICS SPECIALISTS CONFERENCE, 2005. PESC '05. IEEE 36TH, IEEE, PISCATAWAY, NJ, USA, 12. Juni 2005 (2005-06-12), Seiten 1213-1219, XP010883366, DOI: 10.1109/PESC.2005.1581784 ISBN: 978-0-7803-9033-1**

EP 2 996 235 B1

**Beschreibung**

Die gegenständliche Erfindung betrifft einen DC/DC-Wandler zum Wandeln einer ersten Gleichspannung an einem Eingang in eine zweite Gleichspannung an einem Ausgang und ein Verfahren zum Regeln eines solchen DC/DC-Wandlers, wobei im DC/DC-Wandler eine Kondensatorserienschaltung von zumindest drei Kondensatoren vorgesehen ist.

In vielen Anwendungsbereichen ist es notwendig, eine hohe Gleichspannung, z.B. eine Spannung von 330V bis 1000V, in eine deutlich kleinere Gleichspannung, z.B. eine Spannung von 40V bis 60V, also eine Spannung die um einen Faktor im Bereich von 10 kleiner ist, zu wandeln. Bei bidirektionalen Gleichspannungswandlern (DC/DC-Wandlern) entsprechend auch umgekehrt. Das kommt beispielsweise bei Batterieladestationen vor, wo mehrere Batterieladegeräte an einem gemeinsamen DC-Zwischenkreis mit hoher Gleichspannung anliegen und vom Zwischenkreis versorgt werden bzw. elektrische Energie in den Zwischenkreis liefern. Diese Anforderungen sind mit heutiger Technologie an Halbleiterschaltern, z.B. ein MOSFET (Metall-Oxid-Halbleiter-Feldeffekttransistors) oder ein IGBT (Insulated Gate Bipolar Transistor), wie sie in DC/DC-Wandlern eingesetzt werden, nur sehr schwierig zu realisieren.

Bekanntermaßen steigt der Leitungswiderstand eines MOSFETs mit steigender Spannungsfestigkeit und damit auch die Leitungsverluste. Bei derart hohen geforderten Spannungen bzw. damit einhergehender hoher Spannungsfestigkeit, würden bei kostengünstigen Standard-MOSFETs erhebliche Leitungsverluste und damit erhebliche Wirkungsgradeinbußen entstehen. Außerdem müssten aufwendige Kühlkonzepte umgesetzt werden, um die Verlustleistungen abzuführen und eine Überhitzung der Leistungselektronik zu verhindern. Damit können bei diesen Anforderungen keine Standard-MOSFETs eingesetzt werden. Auch kostengünstige Standard-IGBTs scheiden hier aus, da die hohen Ausschaltverluste der IGBTs nicht eliminiert werden können, auch nicht unter Verwendung von Soft-Switching Konzepten, wie z.B. Zero Voltage Switching (ZVS) oder Zero Current Switching (ZCS). Technisch realisierbar wäre ein DC/DC-Wandler für diese Anforderungen mit SiC (Silicon Carbide)-MOSFETs, die allerdings sehr teuer sind und daher für die meisten Anwendungen nicht in Frage kommen.

Ebenso ist es in vielen Anwendungsbereichen erforderlich, dass mit dem DC/DC-Wandler ultrakurze Reaktionszeiten, z.B. im Bereich von 10ms, für extreme Lastsprünge möglich sein müssen. D.h., dass der DC/DC-Wandler innerhalb der Reaktionszeit einen großen Stromsprung realisieren kann. Bei einem Batterieladegerät tritt das beispielsweise beim Umschalten von Laden mit maximaler Leistung auf Entladen mit maximaler Leistung auf, wie es z.B. bei Notstromsystemen auftreten kann. Ähnliche Lastsprünge können auch beim Zu- oder Wegschalten von elektrischen Lasten des Batteriesystems auftreten. Die geforderten Spannungsbereiche bedingen aber eine entsprechende Dimensionierung der passiven elektrischen Komponenten des DC/DC-Wandlers, insbesondere der Kondensatoren und Spulen. Aufgrund der sich damit ergebenden Induktivitätswerte und Kapazitätswerte der verbauten Spulen und Kondensatoren ergibt sich aber eine hohe Zeitkonstante $\tau$ des elektrischen Systems $\left( \tau = \sqrt{LC} \right)$, was die mögliche Reaktionszeit des DC/DC-Wandlers einschränkt.

Aus "A Non-isolated DC-DC Converter with InterCell Transformer for Buck-type or Boosttype Application Requiring High Voltage Ratio and High Efficiency", N. Videau, et al., PCIM Europe 2013, 14 - 16 May, Nuremberg, S.1452-1459, ISBN 973-3-8007-3505-1 ist bereits ein Lösungsansatz für die obigen Probleme beschrieben. Der darin beschriebene DC/DC-Wandler für hohe Spannungsverhältnisse besteht aus zwei bidirektionalen Synchronwandlern in Buck-Topologie. Durch die Stapelung eines ersten Synchronwandlers auf einen zweiten, gespiegelten Synchronwandler kann ein gemeinsamer Ausgang der beiden Synchronwandler parallel genutzt werden. Damit lässt sich ausgangsseitig eine Stromverdopplung der Spulenströme realisieren, da der Spulenstrom bei einem Synchronwandler zu allen Zeitpunkten Teil des Ausgangsstroms ist. Durch den direkten Leistungstransfer des Synchronwandlers wird sowohl während der Magnetisierungsphase der Spule als auch während der Entmagnetisierungsphase Leistung in den Ausgang geliefert. Nachteilig erweist sich allerdings diese Anordnung hinsichtlich des Eingangs des DC/DC-Wandlers. Synchronwandler haben die bekannte Eigenschaft, dass die Ein- und Ausgangsspannung das gleiche Vorzeichen aufweisen. Der Eingang des DC/DC-Wandlers setzt sich damit aus die beiden Eingänge der gestapelten Synchronwandler zusammen, welche durch den gemeinsamen Ausgang miteinander verbunden sind. Der Ausgang wirkt jedoch in dieser Anordnung invers gepolt, wodurch sich der positive Eingangsstrom ausgangsseitig als negativer Anteil auswirkt. Im Normalbetrieb wird dieser negative Anteil durch die Spulenströme vollständig kompensiert und reduziert den Ausgangsstrom um den verhältnismäßig geringen Eingangsstrom. Nachteilig ist dieser Umstand aber bei dynamischen Effekten und Spannungsstößen, was zu hohen Kondensatorströmen führt und sich in einem deutlichen, ausgangsseitigen Spannungseinbruch äußert. Dies kann sich schädigend auf Signal- und Ansteuerelektronik auswirken. Außerdem liegt an den Kondensatoren des DC/DC-Wandlers topologiebedingt im Betrieb des DC/DC-Wandlers mehr als die Hälfte der Eingangsspannung (konkret die Hälfte aus Eingangsspannung + Ausgangsspannung) an. Damit müssen die beiden Kondensatoren auch eine entsprechende Spannungsfestigkeit aufweisen. Bei hohen Eingangsspannungen (≥1000V) kann das aber problematisch werden, da z.B. bei Elektrolytkondensatoren die Spannungsfestigkeit technologiebedingt mit 500V begrenzt ist. Daher kann ein solcher DC/DC-Wandler für große Eingangsspannungen mit Elektrolytkondensatoren überhaupt nicht realisiert werden. Die DE 10 2013 2016 231 A1 beschreibt einen dreiphasigen Mehrpunkt-Stromrichter mit einem Gleichrichterzwischenkreis und drei seriellen Kondensatoren. Ziel ist hier die Symmetrierung der an den Kondensatoren anliegenden Spannungen, um die stufenweise abgegriffenen Ausgangsspannungen konstant zu halten. Die WO 2011/089483 A1 offenbart einen DC/DC-Wandler, der drei Kondensatoren in Serie aufweist,_wobei die Eingangsspannung über jeweils eine Diode an einer Serienschaltung aller Kondensatoren und die Ausgangsspannung an der Serienschaltung aller Kondensatoren anliegt. "Four Level Diode-Clamped Back-To-Back-Converter with active DC link voltage control", R. Strzelecki et al., 2013 International Conference-Workshop Compatibility and Power Electronics, IEEE, S.182-187. offenbart einen DC/DC-Zwischenkreis zur Spannungsstabilisierung. "Control of Boost type Converter at Discontinuous Conduction Mode by Controlling the Product of Inductor Voltage-Second", 2005 PESC '05 IEEE 36th, IEEE, Piscataway, NJ, USA, S. 1213-1219, zeigt eine Steuerung eines DC/DC-Boost-Konverters.

Es ist Ziel der gegenständlichen Erfindung, einen DC/DC-Wandler anzugeben, der kostengünstig für hohe Spannungsverhältnisse realisierbar ist und der kurze Reaktionszeiten zulässt und die Nachteile des bekannten Standes der Technik vermeidet.

Diese Aufgabe wird für den DC/DC-Wandler dadurch gelöst, dass ein erster und mittlerer dritter Kondensator der Kondensatorserienschaltung Teil eines ersten Inverswandlers ist und ein zweiter und der mittlere dritte Kondensator der Kondensatorserienschaltung Teil eines zweiten Inverswandler sind, und die erste Gleichspannung an der Kondensatorserienschaltung anliegt und die zweite Gleichspannung am gemeinsamen dritten Kondensator des ersten und zweiten Inverswandlers anliegt, wobei zur Ausbildung des ersten Inverswandlers eine Brückenschaltung aus einer ersten Schalterserienschaltung mit zumindest einem ersten und zweiten Halbleiterschalter, einer Serienschaltung aus ersten und dritten Kondensator und einer elektrischen Verbindung als Brückenzweig, in der eine erste Spule angeordnet ist, vorgesehen ist, zur Ausbildung des zweiten Inverswandlers eine Brückenschaltung aus einer zweiten Schalterserienschaltung mit zumindest einem dritten und vierten Halbleiterschalter, einer Serienschaltung aus zweiten und dritten Kondensator und einer elektrischen Verbindung als Brückenzweig, in der eine zweite Spule angeordnet ist, vorgesehen ist und die Induktivitätswerte der ersten Spule und zweiten Spule so gewählt sind, dass die Spulenströme über die erste und zweite Spule während einer Schaltperiode der Halbleiterschalter das Vorzeichen wechseln. Durch diese Schaltung erreicht man ebenfalls eine gestapelte und symmetrische Anordnung der beiden Inverswandler, die sich den mittleren Kondensator der Kondensatorserienschaltung teilen. Das Funktionsprinzip von Inverswandlern beruht aber auf indirektem Leistungstransfer. Während der Magnetisierungsphase der Spule wird die Eingangsleistung des Inverswandlers in der Spule zwischengespeichert und während der Entmagnetisierungsphase in den Ausgang geliefert. Durch die Stapelung eines ersten Inverswandlers auf einen zweiten, gespiegelten Inverswandlers kann ein gemeinsamer Ausgang parallel genutzt werden. Damit lässt sich für den erfindungsgemäßen DC/DC-Wandler ausgangsseitig eine Stromverdopplung der Spulenströme während der jeweiligen Entmagnetisierungsphase realisieren. Durch die invertierende Funktion des Inverswandlers addiert sich zusätzlich noch der Eingangsstrom als positiver Teilstrom. Dieser positive Anteil kompensiert zu 100% die geringeren Ausgangsströme des Inverswandlers, welche während der Magnetisierungsphase nicht an den Ausgang übertragen werden. Vorteilhaft erweist sich der erfindungsgemäße DC/DC-Wandler aber insbesondere hinsichtlich des Eingangs. Der Eingang des erfindungsgemäßen DC/DC-Wandler setzt sich aus den beiden Eingängen der Inverswandler und dem gemeinsamen Ausgang der beiden Inverswandler am gemeinsamen mittleren Kondensator zusammen. Damit ist eine klassische Kondensatorserienschaltung mit überlagertem Leistungstransfer möglich. Die dynamischen Effekte wirken sich entsprechend dem kapazitiven Verhältnis gleichmäßig aus, sodass sich die Ausgangsspannung im Wesentlichen nicht ändert. Außerdem liegt an den Kondensatoren des DC/DC-Wandlers topologiebedingt im Betrieb des DC/DC-Wandlers immer weniger als die Hälfte der Eingangsspannung (konkret die Hälfte aus Eingangsspannung - Ausgangsspannung) an. Die notwendige Spannungsfestigkeit der Kondensatoren kann demnach verringert werden. Somit ist selbst bei hohen Eingangsspannungen (1000V) durch die Halbierung und Subtraktion ein Einsatz von Elektrolytkondensatoren möglich. Insbesondere auch bei höheren Ausgangsspannungen als im Stand der Technik. Zusammenfassend ist demnach ein wesentlicher Vorteil, dass mit einer geringeren Spannungsfestigkeit der Kondensatoren des erfindungsgemäßen DC/DC-Wandler die Ausgangsleistung gegenüber dem DC/DC-Wandler nach dem Stand der Technik unverändert bleibt. Nicht zuletzt ist im erfindungsgemäßen DC/DC-Wandler auch die Strombelastung der Kondensatoren der Kondensatorserienschaltung deutlich geringer. Daher lässt sich der erfindungsgemäße DC/DC-Wandler auch kostengünstig mit Standardbauteilen umsetzen.

Ist die Kapazität des dritten Kondensators größer, insbesondere zumindest um das doppelte größer, als die Summe der Kapazitäten des ersten und des zweiten Kondensators so können Auswirkungen transienter Ereignisse, wie beispielsweise Einschaltvorgänge oder Lastsprünge, auch bei größeren Übersetzungsverhältnissen vorteilhaft reduziert werden. Somit können auch Anwendungen, bei denen die Ausgangsspannung auf ein Zehntel der Eingangsspannung gewandelt wird, realisiert werden. Generell kann eine Anpassung des Kondensators ab einem Übersetzungsverhältnis von größer 1 zu 3 vorteilhaft sein. Eventuell auftretende Spannungsspitzen werden entsprechend dem Kapazitätsverhältnis dritter Kondensator zur Summe der Kapazitäten reduziert. Überlastungen der Bauteile bzw. der nachfolgenden Schaltung, die eine Verkürzung der Lebensdauer oder eventuell sogar zum Defekt führen können, können so auch bei hohen Übersetzungsverhältnissen vermieden werden. Dies kann den Einsatz des erfindungsgemäßen DC/DC Wandlers beispielsweise auch für Batterieladestationen, bei denen ein Übersetzungsverhältnis größer 1 zu 10 erforderlich sein kann, erlauben.

Es wird zur Ausbildung des ersten Inverswandlers eine Brückenschaltung aus einer Schalterserienschaltung mit zumindest einem ersten und zweiten Halbleiterschalter, einer Serienschaltung aus ersten und dritten Kondensator und einer elektrischen Verbindung als Brückenzweig, in der eine erste Spule angeordnet und zur Ausbildung des zweiten Inverswandlers eine Brückenschaltung aus einer Schalterserienschaltung mit zumindest einem dritten und vierten Halbleiterschalter, einer Serienschaltung aus zweiten und dritten Kondensator und einer elektrischen Verbindung als Brückenzweig, in der eine zweite Spule angeordnet. Das ergibt einen besonders einfachen schaltungstechnischen Aufbau der beiden Inverswandler.

Wenn der erste und zweite Kondensator gleich groß gewählt wird, dann wird die erste Gleichspannung des DC/DC-Wandlers gleichmäßig auf die beiden Inverswandler aufgeteilt, wodurch diese gleich belastet werden und sich wesentlich niedrigere Anforderungen an die Spannungsfestigkeit der Halbleiterschalter der Inverswandler ergeben. Damit lässt sich auch der Wirkungsgrad des DC/DC-Wandlers erhöhen.

Das erfindungsgemäße Verfahren für einen DC/DC-Wandler zum Wandeln einer ersten Gleichspannung in eine zweite Gleichspannung, bzw. umgekehrt, bei dem die zweite Gleichspannung an einem Kondensator anliegt und im DC/DC-Wandler zwei DC/DC-Wandlereinheiten mit jeweils zumindest einer Spule, zumindest zwei Halbleiterschalter und zumindest einem Kondensator angeordnet sind und die zwei DC/DC-Wandlereinheiten miteinander verschaltet sind, indem sich die beiden DC/DC-Wandlereinheiten den Kondensator, an dem die zweite Gleichspannung anliegt, teilen, wobei die Halbleiterschalter der DC/DC-Wandlereinheiten während aufeinander folgender Schaltperioden abwechselnd geschaltet werden, ist dadurch gekennzeichnet, dass für die Spulenströme über die Spulen der DC/DC-Wandlereinheiten Minimalstromwerte und Maximalstromwerte vorgegeben werden, wobei die Minimalstromwerte und Maximalstromwerte unterschiedliches Vorzeichen aufweisen und das Schalten der Halbleiterschalter der DC/DC-Wandlereinheiten ausgelöst wird, wenn vom jeweiligen Spulenstrom der zugehörige Minimalstromwert oder Maximalstromwert erreicht wird. Die aktuellen Werte der Spulenströme werden dabei vorteilhafterweise durch geeignete Messmittel bestimmt, dies kann beispielsweise mit Hall-Sensoren, Stromshunts oder dergleichen erfolgen. Durch den damit erzwungenen Nulldurchgang der Spulenströme wird Soft-Switching der Halbleiterschalter erzwungen, was die Schaltverluste des DC/DC-Wandlers reduziert und den Wirkungsgrad des DC/DC-Wandlers erhöht.

Hierzu werden die Halbleiterschalter bevorzugt eingeschaltet, nachdem eine jeweilige antiparallele Halbleiterschalterdiode leitend geworden ist, und die Halbleiterschalter ausgeschaltet, wenn der zugehörige Minimalstromwert oder Maximalstromwert erreicht wird. Das ermöglicht eine besonders einfache Umsetzung in einem Regelverfahren zum Regeln des DC/DC-Wandlers.

Ein vorgegebener Ausgangsstrom oder eine vorgegebene Gleichspannung am Ausgang des DC/DC-Wandlers kann einfach eingestellt werden, wenn die Minimalstromwerte und/oder die Maximalstromwerte entsprechend vorgegeben werden. Auch das ermöglicht ein einfaches Regelverfahren für den DC/DC-Wandler.

Besonders vorteilhaft ist es, wenn die Halbleiterschalter der beiden DC/DC-Wandlereinheiten phasenverschoben angesteuert werden, da sich damit die sich ergebenden Stromschwankungen des Ausgangsstromes deutlich reduzieren lassen.

Werden der erste Halbleiterschalter mit dem zweiten Halbleiterschalter sowie der dritte Halbleiterschalter mit dem vierten Halbleiterschalter wechselweise eingeschaltet, so ergibt sich ein nicht lückenender Betrieb und ein ZVS (Zero Voltage Switching) ist für alle Schaltvorgänge möglich. Es gibt somit beinahe keine Schaltverluste und die Regelung ist sowohl einfach, als auch robust.

Wird sichergestellt, dass die Halbleiterschalter derart geschalten werden, sodass immer zumindest der zweite Halbleiterschalter oder der vierte Halbleiterschalter leitend ist, so ergibt sich ein höheres mögliches Spannungsübersetzungsverhältnis, da der zweite bzw. vierte Halbleiterschalter länger eingeschaltet ist. Dadurch ergeben sich ebenso überlappende Einschaltzeiten des zweiten Halbleiterschalters und vierten Halbleiterschalter bei einer Phasenverschiebung.

Die gegenständliche Erfindung wird nachfolgend unter Bezugnahme auf die Figuren 1 bis 12 näher erläutert, die beispielhaft, schematisch und nicht einschränkend vorteilhafte Ausgestaltungen der Erfindung zeigen. Dabei zeigt

Fig.1 einen erfindungsgemäßen DC/DC-Wandler,
Fig.2 bis Fig.9 die Schaltzustände der Halbleiterschalter des DC/DC-Wandlers während einer Schaltperiode,
Fig.10 der sich dabei ergebende Spulenstrom,
Fig.11 der Stromverlauf der Spulenströme und des Ausgangsstromes und
Fig.12 ein Regelkonzept zur Regelung des erfindungsgemäßen DC/DC-Wandlers.

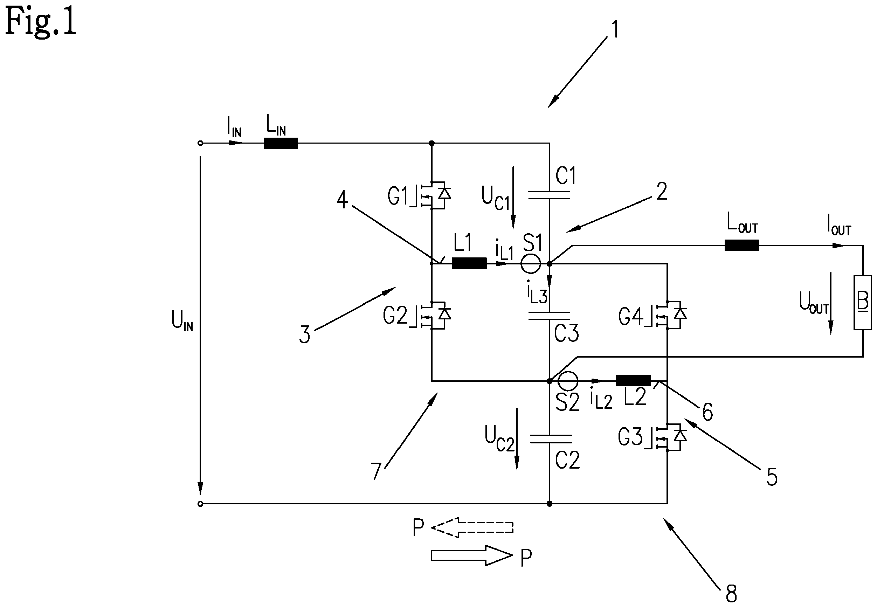

Fig.1 zeigt einen erfindungsgemäßen DC/DC-Wandler 1, ohne galvanische Trennung, zum Wandeln einer ersten Gleichspannung $U_{IN}$ am Eingang des DC/DC-Wandlers 1 in eine zweite Gleichspannung $U_{OUT}$ am Ausgang des DC/DC-Wandlers 1, die an einer elektrischen Last B anliegt. Im Betrieb zieht die elektrische Last B einen Ausgangsstrom $I_{OUT}$ (beispielsweise zum Laden einer Batterie), der einen Eingangsstrom $I_{IN}$ in den DC/DC-Wandler 1 verursacht, der z.B. aus einem nicht dargestellten DC-Zwischenkreis entnommen wird. Im Eingangszweig und/oder im Ausgangszweig kann in bekannter Weise auch eine Filterspule $L_{IN}$, $L_{OUT}$ vorgesehen sein, um Stromschwankungen zu reduzieren. Der erfindungsgemäße DC/DC-Wandler 1 ist bidirektional, sodass Eingang und Ausgang und somit die Richtung des Strom- bzw. Leistungsflusses P auch umgekehrt werden kann, wie in Fig.1 angedeutet. Bei umgekehrter Leistungsflussrichtung würde z.B. elektrische Energie von der Last B, wie z.B. eine Batterie, in einen Zwischenkreis, wie z.B. eines Photovoltaik-Wechselrichters, am Eingang fließen. Gemäß diesem Beispiel kann also der Photovoltaik-Wechselrichter über die Batterie Verbraucher versorgen. In Fig.1 arbeitet der DC/DC-Wandler 1 als Abwärtswandler, d.h., dass die zweite Gleichspannung $U_{OUT}$ kleiner ist, als die erste Gleichspannung $U_{IN}$. In umgekehrter Richtung arbeitet der DC/DC-Wandler 1 demnach als Aufwärtswandler. In diesem Fall wäre die Eingangsspannung die zweite Gleichspannung $U_{OUT}$ und die Ausgangsspannung die erste Gleichspannung $U_{IN}$, gleiches gilt analog für den Eingangs- und Ausgangsstrom. Der Einfachheit halber wird die Funktion des DC/DC-Wandlers 1 aber nur für die Stromrichtung wie in Fig.1 dargestellt beschrieben, wobei für den umgekehrten Betrieb das nachfolgend Gesagte mit vertauschtem Eingang und Ausgang analog gilt.

Der DC/DC-Wandler 1 besteht aus einer Kondensatorserienschaltung 2 von zumindest drei Kondensatoren C1, C2, C3, wobei als Eingangsspannung eine erste Gleichspannung $U_{IN}$, an der Kondensatorserienschaltung 2 anliegt. Die Kondensatorserienschaltung 2 bildet damit einen kapazitiven Spannungsteiler, der die erste Gleichspannung $U_{IN}$ auf die Kondensatoren C1, C2, C3 der Kondensatorserienschaltung 2 aufteilt. Am mittleren dritten Kondensator C3 der Kondensatorserienschaltung 2 liegt eine zweite Gleichspannung $U_{OUT}$ an, die hier als Ausgangsspannung des DC/DC-Wandlers 1 abgegriffen wird. Unter einer Kondensatorserienschaltung 2 wird eine Verschaltung von Kondensatoren verstanden, bei der an allen Kondensatoren C1, C2, C3 der Kondensatorserienschaltung 2 gleichgepolte Spannungen $U_{C1}$, $U_{C2}$, $U_{OUT}$ anliegen. Eine Verschaltung von Kondensatoren, bei der an den Kondensatoren verschieden gepolte Spannungen anliegen (z.B. wie im eingangs zitierten Stand der Technik), wird im Sinne der Erfindung nicht als Serienschaltung von Kondensatoren verstanden.

Eine erste Schalterserienschaltung 3 bestehend aus zwei in Serie geschalteten Halbleiterschaltern G1, G2 ist parallel zum in Serie geschalteten ersten und mittleren dritten Kondensator C1, C3 der Kondensatorserienschaltung 2 geschaltet. Der Kondensator C1 dient entsprechend zur Stabilisierung der ersten Gleichspannung $U_{IN}$. Zwischen ersten und zweiten Halbleiterschalter G1, G2 der ersten Schalterserienschaltung 3 zweigt eine erste elektrische Verbindung 4 ab, in der eine erste Spule L1 angeordnet ist. Diese erste elektrische Verbindung 4 ist zwischen erstem und mittlerem Kondensator C1, C3 mit der Kondensatorserienschaltung 2 verbunden. Diese Brückenschaltung aus erster Schalterserienschaltung 3, ersten und mittleren dritten Kondensator C1, C3 der Kondensatorserienschaltung 2 und der elektrische Verbindung 4 mit der Spule L1 als Brückenzweig bildet einen hinlänglich bekannten ersten bidirektionalen Inverswandler 7, der auch als "Inverting Buck Boost Wandler" bezeichnet wird.

Eine zweite Schalterserienschaltung 5 bestehend aus zwei in Serie geschalteten Halbleiterschaltern G3, G4 ist parallel zum in Serie geschalteten zweiten und mittleren dritten Kondensator C2, C3 der Kondensatorserienschaltung 2 geschaltet. Der Kondensator C2 dient entsprechend zur Stabilisierung der ersten Gleichspannung $U_{IN}$. Zwischen dritten und vierten Halbleiterschalter G3, G4 der zweiten Schalterserienschaltung 5 zweigt eine zweite elektrische Verbindung 6 ab, in der eine zweite Spule L2 angeordnet ist. Diese zweite elektrische Verbindung 6 ist zwischen zweitem und mittlerem Kondensator C2, C3 mit der Kondensatorserienschaltung 2 verbunden. Diese Brückenschaltung aus zweiter Schalterserienschaltung 5, zweiten und mittleren dritten Kondensator C2, C3 der Kondensatorserienschaltung 2 und der elektrische Verbindung 6 mit der Spule L2 als Brückenzweig bildet einen hinlänglich bekannten zweiten bidirektionalen Inverswandler 8, der auch als "Inverting Buck Boost Wandler" bezeichnet wird.

Das besondere an der Schaltung des erfindungsgemäßen DC/DC-Wandlers 1 ist, neben dem kapazitiven Spannungsteiler in Form der Kondensatorserienschaltung 2, dass sich die beiden Inverswandler 7, 8 den mittleren Kondensator C3 der Kondensatorserienschaltung 2 teilen. Die beiden Inverswandler 7, 8 sind damit gestapelt angeordnet und der zweite Inverswandler 8 ist gespiegelt zum ersten Inverswandler 7 angeordnet, womit sich eine symmetrische Schaltung ergibt.

Aufgrund der gestapelten Anordnung und aufgrund des kapazitiven Spannungsteilers wird, unter der Voraussetzung gleicher Kapazitätswerte der Kondensatoren C1, C2, die erste Gleichspannung $U_{IN}$ vorteilhaft zu gleichen Teilen auf die beiden Inverswandler 7, 8 aufgeteilt und liegt entsprechend an den Anschlusspunkten von C1 und C2 an. Damit ergibt sich zwangsweise eine wesentlich niedrigere erforderliche Spannungsfestigkeit der Halbleiterschalter G1, G2, G3, G4 der Inverswandler 7, 8. Durch die Aufteilung des Spannungsbereichs der ersten Gleichspannung $U_{IN}$ auf die Inverswandler 7, 8 kann auch die notwendige Spannungsfestigkeit der Halbleiterschalter G1, G2, G3, G4 entsprechend reduziert werden, was den Einsatz von kostengünstigen Standard MOSFETs ermöglicht und die Herstellkosten für einen erfindungsgemäßen DC/DC-Wandler 1 reduziert. Die Verwendung von MOSFETs ermöglicht außerdem Schalten ohne Schaltverluste im Falle einer Soft-Switching Ansteuerung der Halbleiterschalter G1, G2, G3, G4, wie weiter unten noch erläutert - im Vergleich haben IGBTs hohe Ausschaltverluste. Damit kann der Wirkungsgrad noch weiter erhöht werden. Die Halbleiterschalter G1, G2, G3, G4 weisen daher deutlich geringere Leitungswiderstände auf, wodurch eine deutliche Reduktion der Leitungsverluste und eine Verbesserung des Wirkungsgrades möglich sind. Die Halbierung der ersten Gleichspannung $U_{IN}$ bewirkt zudem eine Verdoppelung des Duty-Cycles der Ansteuerung der Halbleiterschalter G1, G2, G3, G4, wodurch auch die Regelung des DC/DC-Wandlers 1 deutlich verbessert wird.

Aufgrund der gestapelten und gespiegelten Anordnung der Inverswandler 7, 8 des erfindungsgemäßen DC/DC-Wandler 1, liegt an den Kondensatoren C1, C2 auch immer weniger als die Hälfte der ersten Gleichspannung $U_{IN}$ an und alle Kondensatoren C1, C2, C3 der Kondensatorserienschaltung 2 sind gleich gepolt. Damit reduziert sich die erforderliche Spannungsfestigkeit der Kondensatoren C1, C2. Abgesehen davon, kann es in der Schaltung zu keinen gegensätzlich gepolten Spannungen kommen, was die Anforderungen an eine Sicherheits- und Schutzbeschaltung reduziert.

Ist die Kapazität des dritten Kondensators C3 größer, insbesondere zumindest um das doppelte größer, als die Summe der Kapazitäten des ersten Kondensators C1 und des zweiten Kondensators C2, können Auswirkungen transienter Ereignisse, wie beispielsweise Einschaltvorgänge oder Lastsprünge, auch bei größeren Übersetzungsverhältnissen vorteilhaft reduziert werden. Mit einem derart angepassten dritten Kondensator C3 können auch Anwendungen, bei denen die Ausgangsspannung auf ein Zehntel der Eingangsspannung gewandelt wird, realisiert werden. Generell kann eine Anpassung des Kondensators ab einem Übersetzungsverhältnis von größer 1 zu 3 vorteilhaft sein. Eventuell auftretende Spannungsspitzen werden entsprechend dem Kapazitätsverhältnis dritter Kondensator C3 zur Summe der Kapazitäten C1, C2, C3 reduziert. Überlastungen der Bauteile bzw. der nachfolgenden Schaltung, die eine Verkürzung der Lebensdauer oder eventuell sogar zum Defekt führen können, können so auch bei hohen Übersetzungsverhältnissen vermieden werden. Dies kann den Einsatz des erfindungsgemäßen DC/DC Wandlers 1 beispielsweise auch für Batterieladestationen, bei denen ein Übersetzungsverhältnis größer 1 zu 10 erforderlich sein kann, erlauben.

Die Spulen L1, L2 führen jeweils einen Spulenstrom $i_{L1}$, $i_{L2}$, welche jeweils durch geeignete Messmittel S1, S2 bestimmt werden können.

Durch die erfindungsgemäße Schaltung des DC/DC-Wandlers 1 wird auch der Spulenstrom $i_{L1}$, $i_{L2}$ der beiden Inverswandler 7, 8 halbiert, da sich der Ausgangsstrom $I_{OUT}$ schaltungsbedingt aus einer Superposition der Spulenströme $i_{L1}$, $i_{L2}$, und anderer Ströme, ergibt. Durch den gespiegelten Aufbau der beiden Inverswandler 7, 8 wird zudem ohne Zwischenspeicherung der volle Leistungstransfer vom Eingang in den Ausgang garantiert. Der Kondensator C3 dient hier nicht als Zwischenspeicher elektrischer Energie, sondern muss nur mehr einen kleinen Wechselanteil des Ausgangsstromes aufnehmen, wie weiter unten noch eingehender erläutert wird. Das führt auch zu einer deutlich geringeren Strombelastung der Kondensatoren C1, C2, C3.

Sind die Induktivitätswerte der ersten Spule L1 und zweiten Spule L2 so gewählt, dass die Spulenströme $i_{L1}$, $i_{L2}$ über die erste Spule L1 und zweite Spule L2 während einer Schaltperiode der Halbleiterschalter G1, G2, G3, G4 das Vorzeichen wechseln, können alle Halbleiterschalter G1, G2, G3, G4 verlustarm mit ZVS (Zero Voltage Switching) geschaltet werden, wie nachfolgend noch im Detail beschrieben wird. Die aus einer entsprechenden Dimensionierung der Induktivitätswerte folgenden positiven und negativen Spulenströme $i_{L1}$, $i_{L2}$ innerhalb einer Schaltperiode ermöglichen eine einfache Realisierung von ZVS ohne zusätzliche Bauteile. Durch den Wechsel der Stromrichtung der Spulenströme wird nach dem Ausschaltvorgang des gerade leitenden Halbleiterschalters G1, G2, G3, G4 beispielsweise bei Verwendung eines MOSFET dessen Drain-Source Kapazität geladen, während die Drain-Source Kapazität des stromübernehmenden Halbleiterschalters G1, G2, G3, G4 entladen wird. Nach erfolgtem Umladevorgang wird die antiparallele Diode des stromübernehmenden Halbleiterschalters G1, G2, G3, G4 leitend, wodurch der Halbleiterschalter G1, G2, G3, G4 spannungslos eingeschaltet werden kann. Bei Verwendung anderer Halbleiterschalter ergeben sich ähnliche Umladevorgänge. Der symmetrische Aufbau des erfindungsgemäßen DC/DC-Wandlers 1 garantiert zudem gleiche Wirkungsgrade für beide Leistungsflussrichtungen P und gewährleistet somit für den DC/DC-Wandler 1 in beide Richtungen maximale Wirkungsgrade.

Im Folgenden wird das besondere Ansteuerverfahren der Halbleiterschalter G1, G2, G3, G4 erläutert, das für sich genommen ebenfalls erfinderisch ist.

Die beiden Inverswandler 7, 8 könnten mit vergleichsweise hohen Induktivitätswerten der Spulen L1, L2 aufgebaut werden, um die entstehende Stromschwankung $\Delta i_{L1} = \max\{i_{L1}\} - \min\{i_{L1}\}$ je Schaltperiode der Halbleiterschalter G1, G2, G3, G4 innerhalb eines geringen, spezifizierten Bereichs zu halten (das gleiche gilt natürlich auch für $i_{L2}$). Bei typischen Anwendungen solcher DC/DC-Wandler 1 kommen, bei typischen Schaltfrequenzen der Halbleiterschalter G1, G2, G3, G4 im 10kHz-Bereich, z.B. 20kHz bis 90kHz, Spulen L1, L2 mit Induktivitätswerten im Millihenry-Bereich, z.B. L1, L2 = 1 mH, zum Einsatz. Durch die sich damit ergebenden nahezu konstanten Spulenströme $i_{L1}$, $i_{L2}$ sind die Leitungsverluste der Halbleiterschalter G1, G2, G3, G4 sowie die Kupferverluste der Spulen L1, L2 minimiert. Spulenseitig sind die Stromschwankungen durch $\Delta i_{L1}$, $\Delta i_{L2}$ limitiert, wodurch keine Pulsströme auftreten. Problematisch sind hierbei allerdings die Schaltverluste. Je nach Leistungstransfer wird immer einer der Halbleiterschalter G1, G2, G3, G4 der Schalterserienschaltungen 3, 5 hart geschaltet, also bei hohen Strömen. Die entstehenden Verluste äußern sich in zunehmendem Wirkungsgradverlusten und höheren Anforderungen an die Halbleiterschalter G1, G2, G3, G4.

Die Realisierung des DC/DC-Wandlers 1 mit Inverswandler 7, 8 mit kleinen Induktivitätswerten der Spulen L1, L2, was aufgrund der angestrebten niedrigen Zeitkonstanten $\left(\tau = \sqrt{LC}\right)$ des elektrischen Systems an sich wünschenswert ist, äußert sich aber in stark dreiecksförmigen Spulenströmen $i_{L1}$, $i_{L2}$, und damit ohne Gegenmaßnahmen auch in einem stark dreiecksförmigen zweiten Strom $I_{OUT}$, hier der Ausgangsstrom. Unter niedrigen Induktivitätswerten werden hier Werte im $10\,\mu H$ Bereich, also um drei Größenordnungen kleiner, beispielsweise $65\,\mu H$ im oben angeführten Schaltfrequenzbereich, verstanden. Die Spulenströme $i_{L1}$, $i_{L2}$ nehmen damit durch die Dreiecksform auch niedrige Stromwerte (deutlich kleiner als die Scheitelwerte) an, was es ermöglicht, die Halbleiterschalter G1, G2, G3, G4 bei niedrigeren Strömen zu schalten, wodurch die Schaltverluste reduziert werden können. Der Reduzierung von Schaltverlusten steht allerdings der an sich ungünstige dreiecksförmige Stromkurvenverlauf der Spulenströme $i_{L1}$, $i_{L2}$, und des Ausgangsstromes $I_{OUT}$, gegenüber, welcher in vielen Anwendungen, insbesondere für Batterielade- und Batterieentladevorgänge, gänzlich unerwünscht ist. Hohe Stromschwankungen auf der Batterieseite bedingen nämlich bekannter Weise beschleunigte Alterungsvorgänge innerhalb einer Batterie. Abgesehen davon sind aufgrund der Dreiecksform im Vergleich zu annähernd konstanten Spulenströme $i_{L1}$, $i_{L2}$ mit geringeren Stromschwankungen natürlich auch die Effektivwerte der Spulenströme $i_{L1}$, $i_{L2}$ höher, welche wiederum höhere Leitungsverluste bedingen. Obwohl eine solche Realisierung mit kleinen Spulen L1, L2 als ungünstig erscheint, kann damit aber doch ein vorteilhaftes Ansteuerverfahren für den DC/DC-Wandler 1 verwirklicht werden.

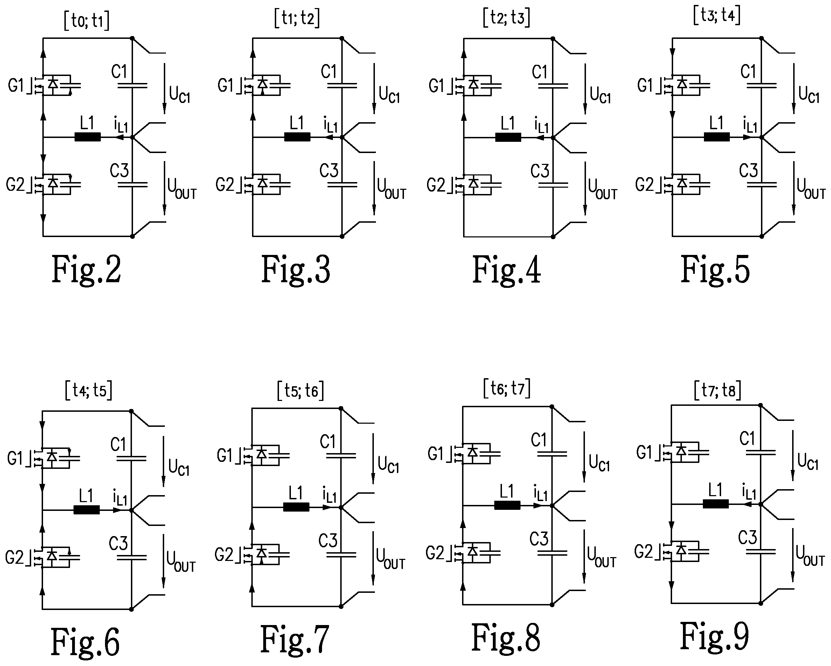

Hierzu werden für eine gewünschte Periodendauer der dreieckförmigen Spulenströme $iL_1$, $i_{L2}$ die Induktivitäten der Spulen L1, L2 so dimensioniert, dass die Spulenströme $i_{L1}$, $i_{L2}$ während der Kommutierungsphasen der Halbleiterschalter G1, G2, G3, G4 das Vorzeichen wechseln können. Durch den Wechsel des Vorzeichens der Spulenströme $i_{L1}$, $i_{L2}$ kann "weiches Schalten" (in Fachkreisen allgemein bekannt als Soft-Switching) realisiert werden. Es handelt sich hierbei um ZVS (Zero Voltage Switching), welches aufgrund der hohen Spannungen im DC/DC-Wandler 1 das primäre Soft-Switching Konzept ist. Die Kommutierungsphasen werden in den Fig.2 bis 10 anhand des ersten Inverswandlers 7 erläutert, wobei für den zweiten Inverswandler 8 und den Spulenstrom $i_{L2}$ der Spule L2 natürlich dasselbe analog gilt.

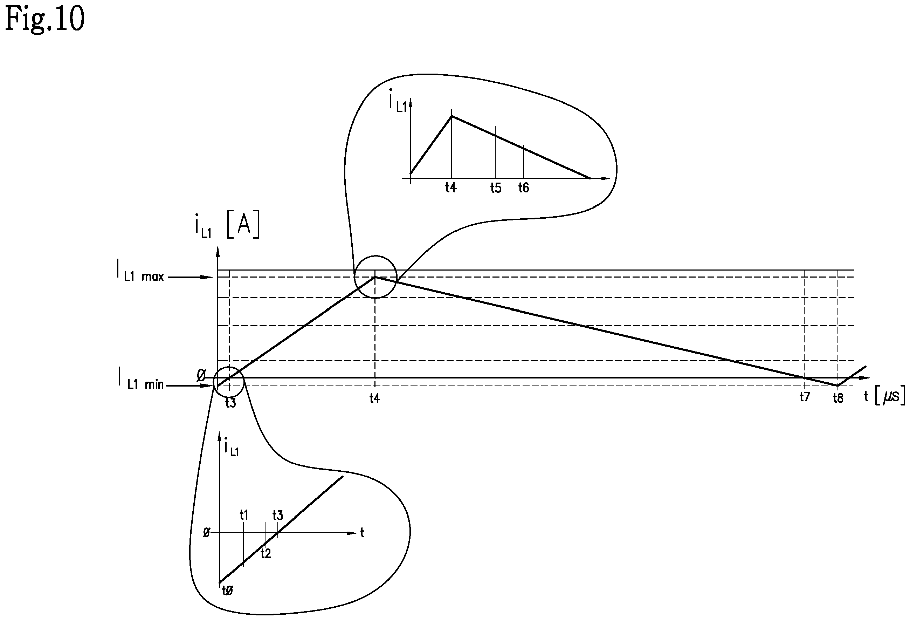

Während der Kommutierungsphasen der Halbleiterschalter G1, G2 werden die parasitären Halbleiterschalterkapazitäten (in Fig.1 jeweils parallel zu den Halbleiterschaltern G1, G2, G3, G4) linear geladen bzw. entladen (Fig.2, Zeitintervall [t0;t1] bzw. Fig.6, Zeitintervall [t4;t5]) bis die antiparallele Halbleiterschalterdiode (in Fig.1 jeweils parallel zu den Halbleiterschaltern G1, G2, G3, G4) leitend wird (Fig.3, Zeitintervall [t1;t2] bzw. Fig.7, Zeitintervall [t5;t6]). Der Zeitpunkt t1 bzw. t5, zu dem die Halbleiterschalterdiode leitend wird, wird durch den Spulenstrom $i_{L1}(t)$ mit $t \in$ [t0;t1] bzw. [t4;t5] und durch die parasitäre Kapazität der Halbleiterschalter G1, G2 bestimmt. Unmittelbar danach wird der erste Halbleiterschalter G1 bzw. der zweite Halbleiterschalter G2 eingeschaltet (Zeitpunkt t2 bzw. t6) und der Spulenstrom $i_{L1}$ ändert während der Ein-Phase des Halbleiterschalters G1, G2 seine Polarität (Zeitpunkt t3 bzw. t7), Fig.4, Zeitintervall [t2;t3] bzw. Fig.8, Zeitintervall [t6;t7]. Der Einschaltzeitpunkt der Halbleiterschalter G1, G2 wäre idealerweise t1 bzw. t5. Nachdem der Umladevorgang der parasitären Kapazitäten der Halbleiterschalter G1, G2 detektiert wird (z.B. durch geeignete verbaute Messsensoren oder Messschaltungen, die in der Lage sind derart schnelle Umladevorgänge zu erfassen), treten signalverarbeitungsbedingte Verzögerungszeiten auf, sodass erst eine kurze Zeitspanne, die systembedingt ist, nach dem Umladen eingeschaltet wird, also zu den Zeitpunkten t2, t6. Zum Umschaltzeitpunkt t2 des Halbleiterschalters G1 tritt zusätzlich zu ZVS auch noch ZCS (Zero Current Switching) auf, da der Spulenstrom $i_{L1}$ zu diesem Zeitpunkt Null oder nahezu null ist, während zum Umschaltzeitpunkt t6 des Halbleiterschalters G2 nur ZVS auftritt. Der Halbleiterschalter G1, G2 bleibt eingeschaltet bis eine obere Grenze $i_{L1max}$ (für Halbleiterschalter G1) bzw. eine untere Grenze $i_{L1min}$ (für Halbleiterschalter G2; negativer Strom) erreicht ist (Fig.5, Zeitintervall [t3;t4] bzw. Fig.9, Zeitintervall [t7,t8]). Zum Zeitpunkt t4, bzw. bei Erreichen der oberen Grenze $i_{L1max}$, wird folglich der Halbleiterschalter G1 ausgeschaltet und mit kurzer, durch Soft-Switching bedingter Verzögerung der Halbleiterschalter G2 eingeschaltet. Zum Zeitpunkt t8, bzw. bei Erreichen der unteren Grenze $i_{L1min}$, wird der Halbleiterschalter G2 ausgeschaltet und mit kurzer, durch Soft-Switching bedingter Verzögerung der Halbleiterschalter G1 eingeschaltet. Diese Schaltperiode der Halbleiterschalter G1, G2 wird entsprechend der Schaltfrequenz periodisch wiederholt. Der zugehörige Stromverlauf des Spulenstromes $i_{L1}$ ist in Fig.10 dargestellt. Der Spulenstrom $i_{L1}$ schwingt damit während einer Schaltperiode der Halbleiterschalter G1, G2 des ersten Inverswandlers 7 mit einer bestimmten Periodendauer (t8-t0) dreiecksförmig zwischen einer oberen Grenze $i_{L1max}$ und einer unteren Grenze $i_{L1min}$, wobei die obere Grenze $i_{L1max}$ und untere Grenze $i_{L1min}$ unterschiedliches Vorzeichen aufweisen, um ZVS zu realisieren.

Es ist dabei selbstverständlich, dass die Spulen L1, L2 und die Halbleiterschalter G1, G2, G3, G4 der Inverswandler 7, 8 entsprechend der Schaltfrequenz, die die Periodendauer der Schaltdauer der Halbleiterschalter G1, G2, G3, G4 festlegt, und der zu erwartenden Ströme und Spannungen zu dimensionieren bzw. auszuwählen sind.

Um trotz der dreieckförmigen Spulenströme $i_{L1}$, $i_{L2}$ einen dreiecksförmigen Ausgangsstrom $I_{OUT}$ zu vermeiden, werden die beiden Inverswandler 7, 8 vorzugsweise phasenverschoben angesteuert, wobei die beiden Inverswandler 7, 8 vorzugsweise um 180° phasenverschoben angesteuert werden, um die Stromschwankungen zu minimieren. Nachdem sich die Spulenströme $i_{L1}$, $i_{L2}$ aufgrund des hohen Spannungsunterschieds zwischen Ein- und Ausgang zumindest zeitweise überlagern, ergibt sich ein Ausgangsstrom $I_{OUT}$ mit einem kleinen Wechselanteil, der vom mittleren Kondensator C3 aufgenommen wird. Aus der Schaltung wie in Fig.1 dargestellt, ergibt sich für die möglichen Schalterstellungen der Halbleiterschalter G1, G2, G3, G4 einfach nachvollziehbar während der gleichzeitigen Ein-Phasen der Halbleiterschalter G2 und G4 eine Überlagerung der Spulenströme $i_{L1}$, $i_{L2}$, wohingegen während der anderen Schaltphasen jeweils nur einer der Spulenströme $i_{L1}$, $i_{L2}$ Teil des Ausgangsstromes $I_{OUT}$ ist:

$$G2 = 0 \text{ und } G4 = 1 \Rightarrow I_{OUT} = i_{L2} + I_{IN}$$

$$G2 = 1 \text{ und } G4 = 0 \Rightarrow I_{OUT} = i_{L1} + I_{IN}$$

$$G2 = 1 \text{ und } G4 = 1 \Rightarrow I_{OUT} = i_{L1} + i_{L2} + I_{IN}$$

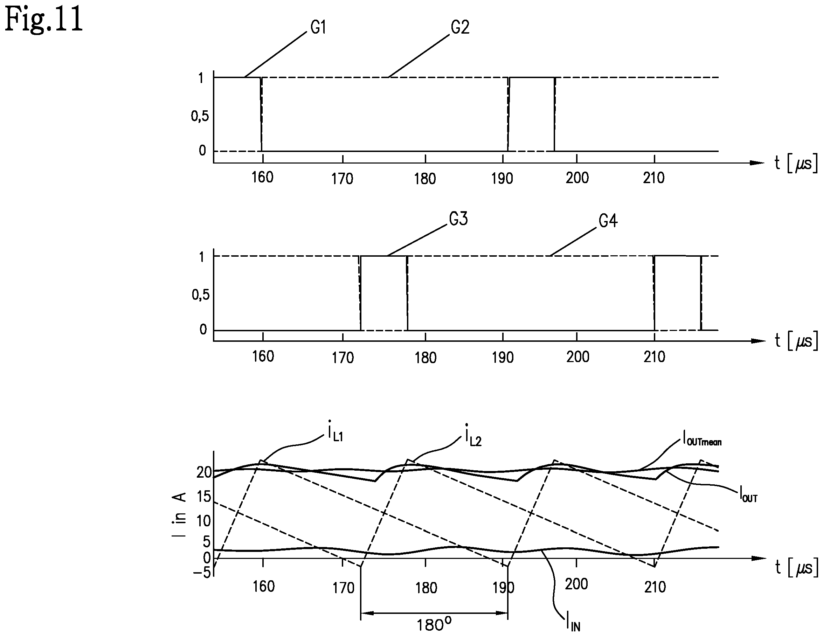

Der theoretisch mögliche Schaltzustand G2 = 0 und G4 = 0, was zu $I_{OUT} = I_{IN}$ führen würde, tritt aufgrund der Phasenverschiebung und des hohen Spannungsunterschieds zwischen Ein- und Ausgang niemals auf. Aufgrund des hohen Spannungsunterschieds zwischen der ersten Gleichspannung $U_{IN}$ und zweiter Gleichspannung $U_{OUT}$ überwiegt je Schaltperiode der Halbleiterschalter G1, G2, G3, G4 das Zeitintervall mit der Addition aller Teilströme (G2 = 1 und G4 = 1). Das ist auch in Fig.11 dargestellt. Die beiden oberen Graphen zeigen die Schaltstellungen der Halbleiterschalter G1, G2, G3, G4. Der untere Graph zeigt die Stromverläufe der beiden Spulenströme $i_{L1}$, $i_{L2}$, des Eingangsstromes $I_{IN}$ und des Ausgangsstromes $I_{OUT}$, sowie des sich einstellenden mittleren Ausgangsstromes $I_{OUTmean}$. Wie ersichtlich, kann die Stromschwankung des Ausgangsstromes $I_{OUT}$ durch das erfindungsgemäße Soft-Switching Verfahren erheblich reduziert werden.

Die Phasenverschiebung bringt nicht nur den Vorteil der geringen Schwankung des Ausgangsstromes $I_{OUT}$, sondern erlaubt die Auslegung der Kondensatoren C1, C2, C3 mit kleineren Kapazitätswerten (aufgrund der geringeren Stromaufnahme). Zusätzlich ergibt sich bei Anwendungen mit geringeren Anforderungen an die Stromschwankung der erhebliche Vorteil, dass auf eine Filterung des Ausgangsstroms $I_{OUT}$ gänzlich verzichtet werden kann.

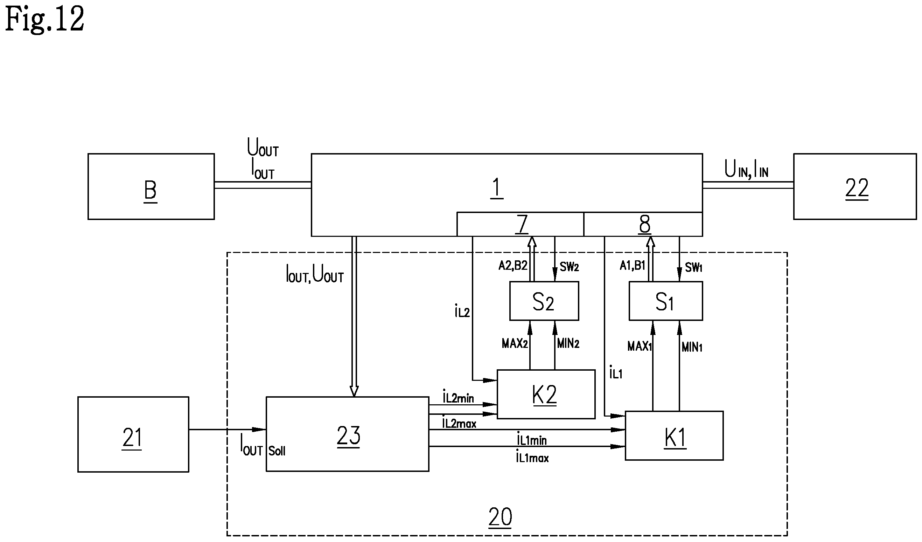

Anhand der Fig.12 wird noch das Regelkonzept des erfindungsgemäßen DC/DC-Wandlers 1 erläutert. Der DC/DC-Wandler 1 liegt hier an einer Gleichspannungsquelle 22, z.B. ein DC-Zwischenkreis eines Photovoltaik-Wechselrichters, an und versorgt eine elektrische Last B, bzw. umgekehrt. Hierzu ist in einer Regeleinheit 20 ein Regelkreis implementiert, der das oben beschriebene Soft-Switching Verfahren umsetzt. Die Regelung des Ausgangsstromes $I_{OUT}$, auf einen von einer übergeordneten Steuereinheit 21, z.B. einem Batterieladegerät eines Batterie, vorgegebenen Sollwert des Ausgangsstromes $I_{OUTsoll}$, erfolgt durch Vorgabe von Minimalstromwerten $i_{L1min}$, $i_{L2min}$ und Maximalstromwerten $i_{L1max}$, $i_{L2max}$ für die Spulenströme $i_{L1}$, $i_{L2}$ zur Realisierung der dreiecksförmigen Stromverläufe. Zur Realisierung von Soft-Switching ZVS haben die Minimalstromwerten $i_{L1min}$, $i_{L2min}$ und Maximalstromwerten $i_{L1max}$, $i_{L2max}$ unterschiedliches Vorzeichen. Alternativ könnte natürlich auch auf eine vorgegebene Gleichspannung $U_{OUTsoll}$ geregelt werden. Ein, vorzugsweise mittels eines Mikrocontrollers realisierter, Stromregler 23 (bzw. Spannungsregler) der Regeleinheit 20 setzt hierzu die Sollwertvorgabe ($I_{OUTsoll}$ oder $U_{OUTsoll}$) in entsprechende Minimalstromwerte $i_{L1min}$, $i_{L2min}$ und Maximalstromwerte $i_{L1max}$, $i_{L2max}$ um. Anhand der Minimal- und Maximalstromwerte $i_{L1min}$, $i_{L2min}$, $i_{L1max}$, $i_{L2max}$ wird die Größe des Ausgangsstromes $I_{OUT}$ bzw. der Gleichspannung $U_{OUT}$ festgelegt. Durch die Vorgabe eines negativen Minimalstromes $i_{L1min}$, $i_{L2min}$ und eines positiven Maximalstromesi $i_{L1max}$, $i_{L2max}$ der Spulenströme $iL_1$, $i_{L2}$, was einen Nulldurchgang der Spulenströme $i_{L1}$, $i_{L2}$ während einer Schaltperiode erzwingt, wird Soft-Switching in jeder Betriebsart ermöglicht. Die gemessenen Spulenströme $i_{L1}$, $i_{L2}$ triggern bei Erreichen dieser Minimal- und Maximalwerte die Pulsmuster für die Schaltung der Halbleiterschalter G1, G2, G3, G4, z.B. wie in Fig.11 dargestellt. Die gemessenen Spulenströme $i_{L1}$, $i_{L2}$ der beiden Inverswandler 7, 8 werden dazu jeweils von einem zugeordneten Fensterkomparator K1, K2 mit den jeweiligen Minimalstromwerten $i_{L1min}$, $i_{L2min}$ und Maximalstromwerten $i_{L1max}$, $i_{L2max}$ verglichen. Bei Erreichen der oberen bzw. unteren Grenze werden die Halbleiterschalter G1, G2, G3, G4 der Inverswandler 7, 8 umgeschaltet, sodass die unsymmetrischen dreiecksförmigen Spulenströme $iL_1$, $i_{L2}$ entstehen, welche zwischen der vorgegebenen oberen und unteren Grenze pendeln. Die Ausgangssignale MIN1, MAX1 und MIN2, MAX2 der Fensterkomparatoren K1, K2 signalisieren jeweils einer zugeordneten Schaltsteuereinheit S1, S2, die beispielsweise als programmierbare Logikschaltung ausgeführt ist, die Umschaltzeitpunkte (Zeitpunkte t0, t4 in Fig.10). Die Schaltsteuereinheiten S1, S2 erzeugen die Schaltmuster für die Halbleiterschalter G1, G2, G3, G4 unter Vorgabe des oben beschriebenen Soft-Switching. Hierzu wird der Umladevorgang der parasitären Kapazitäten der Halbleiterschalter G1, G2, G3, G4 detektiert (wie oben beschrieben) und den Schaltsteuereinheiten S1, S2 über die Eingänge SW1, SW2 angezeigt. Mittels der Ausgangssignale A1, B1 und A2, B2 der Schaltsteuereinheiten S1, S2 werden die Halbleiterschalter G1, G2, G3, G4 des jeweiligen Inverswandlers 7, 8 geschaltet.

Zusätzlich können durch Spannungsüberwachung der an den Kondensatoren C1, C2 abfallenden Spannungen $U_{C1}$, $U_{C2}$ die Vorgaben der Minimalstromwerte $i_{L1min}$, $i_{L2min}$ und Maximalstromwerte $i_{L1max}$, $i_{L2max}$ der beiden Inverswandler 7, 8 ausgeregelt werden, um die Symmetrie der Inverswandler 7, 8 zu wahren. Dazu können im DC/DC-Wandler 1 entsprechende Messeinheiten zum Erfassen der Spannungen $U_{C1}$, $U_{C2}$ verbaut sein. Die Regelvorgabe ist folglich $U_{C1}=U_{C2}$, die gegebenenfalls auch vom Stromregler 23 sichergestellt werden kann.

Die Minimalstromwerte $i_{L1min}$, $i_{L2min}$ und Maximalstromwerte $i_{L1max}$, $i_{L2max}$ sind die vier Stellgrößen der Regeleinheit 20, mit deren Hilfe vier Regelbedingungen erfüllt werden können:

- Regelung des Ausgangsstromes $I_{OUT}$ (oder einer Gleichspannung $U_{OUT}$ am Ausgang) auf den vorgegebenen Sollwert $I_{OUT,soll}$ ($U_{OUT,soll}$). Das ist die Hauptfunktion der Regeleinheit 20.

- Spannungsregelung der an den Kondensatoren C1, C2 anliegenden Spannungen für Symmetrie $U_{C1} = U_{C2}$. Diese Funktion wird vorzugsweise implementiert, um die Symmetrie sicherzustellen bzw. beizubehalten.

- Phasenregelung der Spulenströme $iL_1$, $i_{L2}$ auf die gewünschte Phasenverschiebung von vorzugsweise 180°. Die Phasenverschiebung von 180° ist dann erwünscht, wenn ein Ausgangsstrom $I_{OUT}$ mit geringen Stromschwankungen realisiert werden soll. Grundsätzlich ist jede Phasenverschiebung zwischen 0° und 180° denkbar.

- Stromspitzenregelung der Spulenströme $i_{L1}$, $i_{L2}$ für definierte Nulldurchgänge (Zeitpunkte t3, t7 in Fig.11), um vorzugsweise Soft-Switching zu realisieren.

Die Erfassung der dafür nötigen analogen Messgrößen, beispielsweise $I_{OUT}$, $U_{OUT}$, $U_{IN}$, $i_{L1}$, $i_{L2}$, $U_{C1}$ und $U_{C2}$, kann über im DC/DC-Wandler 1 integrierte Messeinheiten und nachfolgender Analog-Digital-Wandlung erfolgen. Der Phasenunterschied zwischen den Spulenströmen $i_{L1}$, $i_{L2}$ kann im Stromregler 23 durch Timerfunktionen realisiert werden. Da das Umschalten der Spulenströme $i_{L1}$, $i_{L2}$ bei Erreichen der Minimalstromwerten $i_{L1min}$, $i_{L2min}$ und Maximalstromwerten $i_{L1max}$, $i_{L2max}$ sehr zeitkritisch ist, wird dieser Teil der Regelung vorzugsweise außerhalb des Stromreglers 23 mit Hilfe schneller analoger Komparator-Bausteine K1, K2 realisiert, wie in Fig.12 dargestellt.

Grundsätzlich kann das oben beschriebene Ansteuerverfahren der Halbleiterschalter G1, G2, G3, G4 und Regelungskonzept auch für andere bekannte Topologien eines DC/DC-Wandlers 1 eingesetzt werden und ist dementsprechend nicht auf den erfindungsgemäßen DC/DC-Wandler 1 beschränkt. Voraussetzung dafür ist, dass im DC/DC-Wandler 1 zwei verschaltete DC/DC-Wandlereinheiten, wie z.B. Inverswandler 7, 8 wie beim erfindungsgemäßen DC/DC-Wandler 1 gemäß Fig.1 oder Synchronwandler wie im eingangs genannten Stand der Technik, enthalten sind, die über einen gemeinsamen Kondensator C3 am Ausgang des DC/DC-Wandlers 1 verbunden sind. Am gemeinsamen Kondensator C3 liegt die zweite Gleichspannung $U_{OUT}$ des DC/DC-Wandlers 1 an und der gemeinsame Kondensator C3 ist Teil der ersten DC/DC-Wandlereinheit und der zweiten DC/DC-Wandlereinheit.

Je nach Anwendungsfall können anstelle von Spulen L1, L2 auch Drosseln eingesetzt werden. Dies ist beispielsweise der Fall, wenn am Ausgang als elektrische Last B eine Batterie mit einer Leistung im Bereich von 1kW bis 5kW angeschlossen ist, am Eingang die erste Spannung $U_{IN}$ im Bereich von etwa 300V bis 1000V anliegt und am Ausgang die zweite Spannung $U_{OUT}$ etwa im Bereich von 50V bis 200V anliegt. Nachdem der DC/DC-Wandler 1 bidirektional aufgebaut ist, kann entsprechend die Eingangsspannung auch als Ausgangsspannung und umgekehrt definiert werden.

## Patentansprüche

1. DC/DC-Wandler zum Wandeln einer ersten Gleichspannung ($U_{IN}$) an einem Eingang in eine zweite Gleichspannung ($U_{OUT}$) an einem Ausgang, bzw. umgekehrt, wobei im DC/DC-Wandler (1) eine Kondensatorserienschaltung (2) von zumindest drei Kondensatoren (C1, C2, C3) vorgesehen ist, **dadurch gekennzeichnet, dass** ein erster Kondensator (C1) und mittlerer dritter Kondensator (C3) der Kondensatorserienschaltung (2) Teil eines ersten Inverswandlers (7) ist und ein zweiter Kondensator (C2) und der mittlere dritte Kondensator (C2) der Kondensatorserienschaltung (2) Teil eines zweiten Inverswandler (8) sind, dass die erste Gleichspannung ($U_{IN}$) an der Kondensatorserienschaltung (2) anliegt und die zweite Gleichspannung ($U_{OUT}$) am gemeinsamen dritten Kondensator (C3) des ersten und zweiten Inverswandlers (7, 8) anliegt, dass zur Ausbildung des ersten Inverswandlers (7) eine Brückenschaltung aus einer ersten Schalterserienschaltung (3) mit zumindest einem ersten und zweiten Halbleiterschalter (G1, G2), einer Serienschaltung aus ersten und dritten Kondensator (C1, C3) und einer elektrischen Verbindung (4) als Brückenzweig, in der eine erste Spule (L1) angeordnet ist, vorgesehen ist, dass zur Ausbildung des zweiten Inverswandlers (8) eine Brückenschaltung aus einer zweiten Schalterserienschaltung (5) mit zumindest einem dritten und vierten Halbleiterschalter (G3, G4), einer Serienschaltung aus zweiten und dritten Kondensator (C2, C3) und einer elektrischen Verbindung (6) als Brückenzweig, in der eine zweite Spule (L2) angeordnet ist, vorgesehen ist, **und dass** die Induktivitätswerte der ersten Spule (L1) und zweiten Spule (L2) so gewählt sind, dass die Spulenströme ($i_{L1}$, $i_{L2}$) über die erste und zweite Spule (L1. L2) während einer Schaltperiode der Halbleiterschalter (G1, G2, G3, G4) das Vorzeichen wechseln.

2. DC/DC-Wandler nach Anspruch 1, **dadurch gekennzeichnet, dass** die Kapazität des dritten Kondensators (C3) größer, insbesondere zumindest doppelt so groß, wie die Summe der Kapazitäten des ersten Kondensators (C1) und des zweiten Kondensators (C2) ist.

3. DC/DC-Wandler nach Anspruch 1 oder 2, **dadurch gekennzeichnet, dass** der erste Kondensator (C1) und zweite Kondensator (C2) gleich groß sind.

4. DC/DC-Wandler nach einem der Ansprüche 1 bis 3, **dadurch gekennzeichnet, dass** in Serie zur ersten Spule (L1) und zweiten Spule (L2) jeweils ein Messmittel (S1, S2) zur Messung der Spulenströme ($i_{L1}$, $i_{L2}$) angeordnet ist.

5. Verfahren zum Regeln eines DC/DC-Wandlers (1) zum Wandeln einer an einem Eingang anliegenden ersten Gleichspannung ($U_{IN}$) in eine an einem Ausgang anliegende zweite Gleichspannung ($U_{OUT}$), bzw. umgekehrt, **dadurch gekennzeichnet, dass** die zweite Gleichspannung ($U_{OUT}$) an einem Kondensator (C3) anliegt und im DC/DC-Wandler (1) zwei DC/DC-Wandlereinheiten mit jeweils zumindest einer Spule (L1, L2), zumindest zwei Halbleiterschaltern (G1, G2, G3, G4) und zumindest einem Kondensator (C1, C2, C3) angeordnet sind und die zwei DC/DC-Wandlereinheiten miteinander verschaltet sind, indem sich die beiden DC/DC-Wandlereinheiten den Kondensator (C3), an dem die zweite Gleichspannung ($U_{OUT}$) anliegt, teilen, wobei die Halbleiterschalter (G1, G2, G3, G4) der DC/DC-Wandlereinheiten während aufeinander folgender Schaltperioden abwechselnd geschaltet werden, wobei für die Spulenströme ($i_{L1}$, $i_{L2}$) über die Spulen (L1, L2) der DC/DC-Wandlereinheiten Minimalstromwerte ($i_{L1min}$, $i_{L2min}$) und Maximalstromwerte ($i_{L1max}$, $i_{L2max}$) vorgegeben werden und die Minimalstromwerte ($i_{L1min}$, $i_{L2min}$) und Maximalstromwerte ($i_{L1max}$, $i_{L2max}$) unterschiedliches Vorzeichen aufweisen und das Schalten der Halbleiterschalter (G1, G2, G3, G4) der DC/DC-Wandlereinheiten jeweils ausgelöst wird, wenn vom jeweiligen Spulenstrom ($i_{L1}$, $i_{L2}$) der zugehörige Minimalstromwert ($i_{L1min}$, $i_{L2min}$) oder Maximalstromwert ($i_{L1max}$, $i_{L2max}$) erreicht wird.

6. Verfahren nach Anspruch 5, **dadurch gekennzeichnet, dass** die Halbleiterschalter (G1, G2, G3, G4) eingeschaltet werden, nachdem eine jeweilige antiparallele Halbleiterschalterdiode leitend geworden ist.

7. Verfahren nach Anspruch 5, **dadurch gekennzeichnet, dass** die Halbleiterschalter (G1, G2, G3, G4) ausgeschaltet werden, wenn der zugehörige Minimalstromwert ($i_{L1min}$, $i_{L2min}$) oder Maximalstromwert ($i_{L1max}$, $i_{L2max}$) erreicht wird.

8. Verfahren nach einem der Ansprüche 5 bis 7, **dadurch gekennzeichnet, dass** durch Vorgabe der Minimalstromwerte ($i_{L1min}$, $i_{L2min}$) und/oder der Maximalstromwerte ($i_{L1max}$, $i_{L2max}$) ein vorgegebener Ausgangsstrom ($I_{IN}$, $I_{OUT}$) oder eine vorgegebene Gleichspannung am Ausgang ($U_{IN}$, $U_{OUT}$) des DC/DC-Wandlers (1) eingestellt wird.

9. Verfahren nach einem der Ansprüche 5 bis 8, **dadurch gekennzeichnet, dass** die Halbleiterschalter (G1, G2, G3, G4) der beiden DC/DC-Wandlereinheiten phasenverschoben angesteuert werden.

10. Verfahren nach einem der Ansprüche 5 bis 9, **dadurch gekennzeichnet, dass** der Halbleiterschalter (G1) mit dem Halbleiterschalter (G2) und der Halbleiterschalter (G3) mit dem Halbleiter (G4) wechselweise geschaltet werden.

11. Verfahren nach Anspruch 10, **dadurch gekennzeichnet, dass** die Halbleiterschalter (G2, G4) derart geschalten werden, sodass immer zumindest der zweite Halbleiterschalter (G2) oder der vierte Halbleiterschalter (G4) leitend ist.

12. Verfahren nach einem der Ansprüche 5 bis 11, wobei im DC/DC-Wandler (1) eine Kondensatorserienschaltung (2) mit dem gemeinsamen Kondensator (C3) und weiteren ersten und zweiten Kondensator (C1, C2) vorgesehen ist, **dadurch gekennzeichnet, dass** durch Vorgabe der Minimalstromwerte ($i_{L1min}$, $i_{L2min}$) und/oder der Maximalstromwerte ($i_{L1max}$, $i_{L2max}$) die am ersten Kondensator (C1) und zweiten Kondensator (C2) der Kondensatorserienschaltung (2) abfallenden Spannungen ($U_{C1}$, $U_{C2}$) aneinander angeglichen werden.

**Claims**

1. A DC/DC converter for converting a first direct-current voltage ($U_{IN}$) at an input into a second direct-current voltage ($U_{OUT}$) at an output, and vice versa, wherein a capacitor series connection (2) of at least three capacitors (C1, C2, C3) is provided in the DC/DC converter (1), **characterized in that** a first capacitor (C1) and middle third capacitor (C3) of the capacitor series connection (2) are part of a first inverting buck-boost converter (7) and a second capacitor (C2) and the middle third capacitor (C2) of the capacitor series connection (2) are part of a second inverting buck-boost converter (8), and **that** the first direct-current voltage ($U_{IN}$) is applied to the capacitor series connection (2) and the second direct-current voltage ($U_{OUT}$) is applied at the common third capacitor (C3) of the first and second inverting buck-boost converter (7, 8), **that**, to form the first inverting buck-boost converter (7), a bridge circuit composed of a first switch series circuit (3) with at least one first and second semiconductor switch (G1, G2), a series connection composed of first and third capacitor (C1, C3) and an electrical connection (4) as a bridge arm in which a first coil (L1) is arranged are provided **that**, to form the second inverting buck-boost converter (8), a bridge circuit composed of a second switch series circuit (5) with at least one third and fourth semiconductor switch (G3, G4), a series connection composed of second and third capacitor (C2, C3) and an electrical connection (6) as a bridge arm in which a second coil (L2) is arranged are provided **and that** the inductance values of the first coil (L1) and second coil (L2) are selected such that the coil currents ($i_{L1}$, $i_{L2}$) change signs via the first and second coil (L1. L2) during a switching period of the semiconductor switches (G1, G2, G3, G4).

2. The DC/DC converter as set forth in claim 1, **characterized in that** the capacitance of the third capacitor (C3) is greater than, particularly at least twice as large as the sum of the capacitances of the first capacitor (C1) and of the second capacitor (C2).

3. The DC/DC converter as set forth in claim 1 or 2, **characterized in that** the first capacitor (C1) and second capacitor (C2) are of equal size.

4. The DC/DC converter as set forth in any one of claims 1 to 3, **characterized in that** a measuring means (S1, S2) for measuring the coil currents ($i_{L1}$, $i_{L2}$) is arranged in series to the first coil (L1) and second coil (L2), respectively.

5. A method for regulating a DC/DC converter (1) for converting a first direct-current voltage ($U_{IN}$) at an input into a second direct-current voltage ($U_{OUT}$) at an output, and vice versa, **characterized in that** the second direct-current voltage ($U_{OUT}$) is applied to a capacitor (C3) and two DC/DC converter units, each with at least one coil (L1, L2), at least two semiconductor switches (G1, G2, G3, G4) and at least one capacitor (C1, C2, C3) are arranged in the DC/DC converter (1), and the two DC/DC converter units are interconnected as a result of the two DC/DC converter units sharing the capacitor (C3) to which the second direct-current voltage ($U_{OUT}$) is applied, the semiconductor switches (G1, G2, G3, G4) of the DC/DC converter units being switched alternatingly during successive switching periods, minimum current values ($i_{L1min}$, $i_{L2min}$) and maximum current values ($i_{L1max}$, $i_{L2max}$) being prescribed for the coil currents ($i_{L1}$, $i_{L2}$) via the coils (L1, L2) of the DC/DC converter units and the minimum current values ($i_{L1min}$, $i_{L2min}$) and maximum current values ($i_{L1max}$, $i_{L2max}$) having different signs, and the switching of the semiconductor switches (G1, G2, G3, G4) of the DC/DC converter units each being triggered when the associated minimum current value ($i_{L1min}$, $i_{L2min}$) or maximum current value ($i_{L1max}$, $i_{L2max}$) is reached by the respective coil current ($i_{L1}$, $i_{L2}$).

6. The method as set forth in claim 5, **characterized in that** the semiconductor switches (G1, G2, G3, G4) are switched on after a respective antiparallel semiconductor switch diode has become conductive.

7. The method as set forth in claim 5, **characterized in that** the semiconductor switches (G1, G2, G3, G4) are switched off when the associated minimum current value ($i_{L1min}$, $i_{L2min}$) or maximum current value ($i_{L1max}$, $i_{L2max}$) is reached.

8. The method as set forth in any one of claims 5 to 7, **characterized in that,** by specifying the minimum current values ($i_{L1min}$, $i_{L2min}$) and/or the maximum current values ($i_{L1max}$, $i_{L2max}$), a predetermined output current ($I_{IN}$, $I_{OUT}$) or a predetermined direct-current output voltage ($U_{IN}$, $U_{OUT}$) is set at the output of the DC/DC converter (1).

9. The method as set forth in any one of claims 5 to 8, **characterized in that** the semiconductor switches (G1, G2, G3, G4) of the two DC/DC converter units are actuated in a phase-shifted manner.

10. The method as set forth in any one of claims 5 to 9, **characterized in that** the semiconductor switch (G1) is switched alternatingly with the semiconductor switch (G2) and the semiconductor switch (G3) is switched alternatingly with the semiconductor (G4).

11. The method as set forth in claim 10, **characterized in that** the semiconductor switches (G2, G4) are switched such that at least the second semiconductor switch (G2) or the fourth semiconductor switch (G4) is always conductive.

12. The method as set forth in any one of claims 5 to 11, wherein a capacitor series connection (2) with the common capacitor (C3) and additional first and second capacitor (C1, C2) is provided in the DC/DC converter (1), **characterized in that,** by specifying the minimum current values ($i_{L1min}$, $i_{L2min}$) and/or the maximum current values ($i_{L1max}$, $i_{L2max}$), the voltages ($U_{C1}$, $U_{C2}$) dropping at the first capacitor (C1) and second capacitor (C2) of the capacitor series connection (2) are matched to one another.

## Revendications

1. Convertisseur CC/CC permettant de convertir une première tension continue ($U_{IN}$) au niveau d'une entrée en une seconde tension continue ($U_{OUT}$) au niveau d'une sortie, ou vice versa, un circuit en série de condensateurs (2) d'au moins trois condensateurs (C1, C2, C3) étant prévu dans le convertisseur CC/CC (1), **caractérisé en ce qu'**un premier condensateur (C1) et un troisième condensateur central (C3) du circuit en série de condensateurs (2) font partie d'un premier convertisseur inverse (7), et un deuxième condensateur (C2) et le troisième condensateur central (C2) du circuit en série de condensateurs (2) font partie d'un second convertisseur inverse (8), **en ce que** la première tension continue ($U_{IN}$) est appliquée au circuit en série de condensateurs (2) et la seconde tension continue ($U_{OUT}$) est appliquée au troisième condensateur commun (C3) des premier et deuxième convertisseurs inverses (7, 8), **en ce qu'**un circuit en pont constitué d'un premier circuit en série de commutateurs (3) comportant au moins des premier et deuxième commutateurs à semi-conducteur (G1, G2), un circuit en série constitué des premier et troisième condensateurs (C1, C3) et une connexion électrique (4) est prévu pour la réalisation du premier convertisseur inverse (7) sous la forme d'une branche de pont dans laquelle une première bobine (L1) est disposée, **en ce qu'**un circuit en pont constitué d'un second circuit en série de commutateurs (5) comportant au moins des troisième et quatrième commutateurs à semi-conducteur (G3, G4), un circuit en série constitué des deuxième et troisième condensateurs (C2, C3) et une connexion électrique (6) est prévu pour la réalisation du second convertisseur inverse (8) sous la forme d'une branche de pont dans laquelle une seconde bobine (L2) est disposée, **et en ce que** les valeurs d'inductance de la première bobine (L1) et de la seconde bobine (L2) sont sélectionnées de telle manière que les courants de bobine ($i_{L1}$, $i_{L2}$) changent le signe par l'intermédiaire des première et seconde bobines (L1, L2) pendant une période de commutation des commutateurs à semi-conducteur (G1, G2, G3, G4).

2. Convertisseur CC/CC selon la revendication 1, **caractérisé en ce que** la capacité du troisième condensateur (C3) est plus grande, en particulier au moins deux fois plus grande, que la somme des capacités du premier condensateur (C1) et du deuxième condensateur (C2).

3. Convertisseur CC/CC selon la revendication 1 ou 2, **caractérisé en ce que** le premier condensateur (C1) et le deuxième condensateur (C2) sont de même taille.

4. Convertisseur CC/CC selon l'une des revendications 1 à 3, **caractérisé en ce qu'**un moyen de mesure (S1, S2) permettant de mesurer les courants de bobine ($i_{L1}$, $i_{L2}$) est disposé en série avec la première bobine (L1) et la seconde bobine (L2) respectivement.

5. Procédé de régulation d'un convertisseur CC/CC (1) pour convertir une première tension continue appliquée au niveau d'une entrée ($U_{IN}$) en une seconde tension continue appliquée au niveau d'une sortie ($U_{OUT}$), ou vice versa, **caractérisé en ce que** la seconde tension continue ($U_{OUT}$) est appliquée à un condensateur (C3), deux unités de convertisseur CC/CC, comportant chacun au moins une bobine (L1, L2), au moins deux commutateurs à semi-conducteur (G1, G2, G3, G4) et au moins un condensateur (C1, C2, C3), sont disposées dans le convertisseur CC/CC (1), et les deux unités de convertisseur CC/CC sont interconnectées du fait que les deux unités de convertisseur CC/CC partagent le condensateur (C3) auquel la seconde tension continue ($U_{OUT}$) est appliquée, les commutateurs à semi-conducteur (G1, G2, G3, G4) des unités de convertisseur CC/CC étant commutés alternativement pendant des périodes de commutation successives, des valeurs minimales de courant ($i_{L1min}$, $i_{L2min}$) et des valeurs maximales de courant ($i_{L1max}$, $i_{L2max}$) étant prédéfinies pour les courants de bobine ($i_{L1}$, $i_{L2}$) par l'intermédiaire des bobines (L1, L2) des unités de convertisseur CC/CC, les valeurs minimales de courant ($i_{L1min}$, $i_{L1min}$) et les valeurs maximales de courant ($i_{L1max}$, $i_{L2max}$) présentant des signes différents, et la commutation des commutateurs à semi-conducteur (G1, G2, G3, G4) des unités de convertisseur CC/CC étant respectivement déclenchée lorsque la valeur minimale de courant ($i_{L1min}$, $i_{L2min}$) ou la valeur maximale de courant ($i_{L1max}$, $i_{L2max}$) est atteinte par chaque courant de bobine ($i_{L1}$, $i_{L2}$).

6. Procédé selon la revendication 5, **caractérisé en ce que** les commutateurs à semi-conducteur (G1, G2, G3, G4) sont activés après qu'une diode de commutateur à semi-conducteur anti-parallèle respective est devenue conductrice.

7. Procédé selon la revendication 5, **caractérisé en ce que** les commutateurs à semi-conducteur (G1, G2, G3, G4) sont désactivés lorsque la valeur minimale de courant ($i_{L1min}$, $i_{L2min}$) ou la valeur maximale de courant ($i_{L1max}$, $i_{L2max}$) associée est atteinte.

8. Procédé selon l'une des revendications 5 à 7, **ca-**

**ractérisé en ce qu'**un courant de sortie ($I_{IN}$, $I_{OUT}$) prédéfini et/ou une tension continue prédéfinie au niveau de la sortie ($U_{IN}$, $U_{OUT}$) du convertisseur CC/CC (1) est réglé(e) par la spécification des valeurs minimales de courant ($i_{L1min}$, $i_{L2min}$) et/ou des valeurs maximales de courant ($i_{L1max}$, $i_{L2max}$).

9. Procédé selon l'une des revendications 5 à 8, **caractérisé en ce que** les commutateurs à semi-conducteur (G1, G2, G3, G4) des deux unités de convertisseur CC/CC sont commandés hors-phase.

10. Procédé selon l'une des revendications 5 à 9, **caractérisé en ce que** le commutateur à semi-conducteur (G1) est commuté alternativement au moyen du commutateur à semi-conducteur (G2) et le commutateur à semi-conducteur (G3) est commuté alternativement au moyen du semi-conducteur (G4).

11. Procédé selon la revendication 10, **caractérisé en ce que** les commutateurs à semi-conducteur (G2, G4) sont commutés de telle manière qu'au moins le deuxième commutateur à semi-conducteurs (G2) ou le quatrième commutateur à semi-conducteur (G4) soit toujours conducteur.

12. Procédé selon l'une des revendications 5 à 11, selon lequel un circuit en série de condensateurs (2) comportant le condensateur commun (C3) et d'autres premier et deuxième condensateurs (C1, C2) est prévu dans le convertisseur CC/CC (1), **caractérisé en ce que** les tensions (UC1, UC2) chutant sur le premier condensateur (C1) et le deuxième condensateur (C2) du circuit en série de condensateurs (2) sont adaptées l'une à l'autre par la spécification des valeurs minimales de courant ($i_{L1min}$, $i_{L2min}$) et/ou des valeurs maximales de courant ($i_{L1max}$, $i_{L2max}$).

# Fig.1

Fig.2 [t0;t1]

Fig.3 [t1;t2]

Fig.4 [t2;t3]

Fig.5 [t3;t4]

Fig.6 [t4;t5]

Fig.7 [t5;t6]

Fig.8 [t6;t7]

Fig.9 [t7;t8]

Fig.10

# Fig.11

# Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1020132016231 A1

- WO 2011089483 A1

**In der Beschreibung aufgeführte Nicht-Patentliteratur**

- **N. VIDEAU et al.** A Non-isolated DC-DC Converter with InterCell Transformer for Buck-type or Boosttype Application Requiring High Voltage Ratio and High Efficiency. *PCIM Europe,* 14. Mai 2013, ISBN 973-3-8007-3505-1, 1452-1459

- Four Level Diode-Clamped Back-To-Back-Converter with active DC link voltage control. **R. STRZELECKI et al.** 2013 International Conference-Workshop Compatibility and Power Electronics. IEEE, 182-187
- Control of Boost type Converter at Discontinuous Conduction Mode by Controlling the Product of Inductor Voltage-Second. PESC '05 IEEE 36. IEEE, 2005, 1213-1219